# FASCICULE DE BREVET EUROPEEN

(11) **EP 3 045 801 B1**
(45) Date de publication et mention de la délivrance du brevet: **29.06.2022**
(21) Numéro de dépôt: 16151123.3
(22) Date de dépôt: 13.01.2016
(51) Int. Cl.: B60Q 1/22, B60Q 1/26, B60Q 1/30, B60Q 1/44, F21S 43/14, F21S 43/237, F21S 43/243, F21S 43/247, F21S 43/249

(54) **PROCEDE DE COMMANDE D'UN FEU ARRIERE DE VEHICULE ET FEU ARRIERE**
VERFAHREN ZUR BEDIENUNG EINES FAHRZEUGRÜCKLICHTS UND FAHRZEUGRÜCKLICHT
METHOD FOR CONTROLLING A REAR LIGHT OF A VEHICLE AND REAR LIGHT

(30) Priorité: 15.01.2015 FR 1550305
(43) Date de publication de la demande: 20.07.2016
(73) Titulaire: VALEO ILUMINACION, 23600 Martos (ES)
(72) Inventeur: DEL CARMEN MONTANO, Maria, 23600 MARTOS (ES); FUENTES, Manuel, 23600 MARTOS (ES); MARTINEZ, Juan Manuel, 18014 GRANADA (ES)
(74) Mandataire: Valeo Visibility

(56) Documents cités:
- WO-A1-2014/135762
- WO-A2-2012/162203
- DE-A1- 19 753 096
- DE-A1-102010 056 313
- DE-A1-102011 009 100
- DE-A1-102012 017 596
- DE-A1-102013 105 261
- US-A1- 2005 254 240

## Description

La présente invention se rapporte au domaine des feux arrière de véhicule automobile, notamment à des feux arrière avec plusieurs modules optiques générant des faisceaux lumineux et à des procédés de gestion de ces modules optiques.

Des feux arrière de véhicules sont décrits dans les documents DE 19753096, US 2005254240, WO 2012162203, DE 102012017596 et DE 102010056313.

Le document US2014/0160779 divulgue un feu arrière de véhicule, dans lequel une partie du feu réalise une fonction de feu stop, ou indicateur de freinage du véhicule, quel que soit le mode de fonctionnement du feu arrière, et en dessous une partie réalisant, selon deux modes de fonctionnement, un feu de position ou un indicateur de direction.

Cependant, un tel feu arrière présente un certain encombrement. En effet, ses différentes parties comprennent au moins autant de modules optiques différents, tels que des guides de lumière associés à des diodes électroluminescentes, qu'il y a de fonctions de signalisation à mettre en œuvre. Egalement, la partie générant le feu stop doit être suffisamment puissante et avoir une surface éclairante suffisamment grande pour pouvoir être vue, ce qui donne également une contrainte supplémentaire d'encombrement.

Le problème technique que vise à résoudre l'invention est donc de diminuer l'encombrement d'un feu arrière de véhicule tout en lui permettant de réaliser de manière réglementaire ses différentes fonctions de signalisation.

A cet effet, un premier objet de l'invention est un procédé de commande de modules optiques d'un feu arrière d'un véhicule, ledit procédé comprenant les étapes ci-après:
- activer un premier ensemble d'un ou plusieurs modules optiques, ledit premier ensemble générant une première fonction de signalisation,
- si la marche arrière est enclenchée sur le véhicule, activer selon un premier mode de fonctionnement un deuxième ensemble d'un ou plusieurs modules optiques, de manière à ce que ledit deuxième ensemble génère une deuxième fonction de signalisation distincte de la première fonction de signalisation,
- si la marche arrière n'est pas enclenchée sur le véhicule, activer selon un deuxième mode de fonctionnement le ou au moins l'un des modules optiques dudit deuxième ensemble, de manière à ce que ce module optique, dit module optique bi-fonction, génère un faisceau lumineux complémentaire distinct du faisceau lumineux qu'il émet dans le premier mode de fonctionnement, ce faisceau lumineux complémentaire distinct venant compléter la première fonction de signalisation, ledit faisceau lumineux complémentaire présentant une répartition photométrique dont le motif est identique à celui de la répartition photométrique de la première fonction.

Ce procédé prend le contre-pied des solutions classiquement utilisées. En effet, dans les feux arrière de l'art antérieur, certaines fonctions de signalisation, notamment la fonction de feu de position arrière ou la fonction de feu stop, sont toujours mises en œuvre en maximisant constamment leur puissance, dans le cas du feu stop en maximisant la puissance pour une intensité de freinage donnée.

Or, la demanderesse s'est aperçue que pour ces fonctions de signalisation, notamment la fonction de feu de position arrière ou la fonction de feu stop, il était possible d'avoir une puissance lumineuse moins élevée lorsque le véhicule reculait que lorsque le véhicule avançait. En effet, le véhicule recule dans des situations de manœuvre ou du moins dans des lieux où la vitesse est moins élevée. En revanche, lorsque le véhicule avance, il est davantage susceptible de rouler dans une zone où le trafic automobile a lieu à des vitesses élevées, en particulier sur une autoroute. Ainsi, lorsque le véhicule avance, ses fonctions de signalisation ont besoin d'être vues de plus loin que lorsqu'il recule.

Par conséquent, la demanderesse a choisi un procédé utilisant un module optique apte à générer deux faisceaux lumineux différents, ci-après module optique bi-fonction. Selon ce procédé, lorsque le véhicule recule, ou a enclenché la marche arrière, ce module optique bi-fonction réalise seul ou participe à une deuxième fonction de signalisation, la première fonction de signalisation étant toujours active ou apte à être activée par le premier ensemble de modules optiques. Lorsque le véhicule avance, ou est en marche avant, ce module optique bi-fonction génère un autre faisceau dit faisceau lumineux complémentaire, qui vient compléter la première fonction, notamment en la renforçant et/ou en augmentant son angle d'ouverture, permettant ainsi à la première fonction de signalisation d'être vue de plus loin.

Le procédé selon l'invention permet donc de gagner en compacité, car un même module est utilisé dans deux fonctions différentes, tout en gardant des performances satisfaisantes.

A noter que le premier mode est mis en œuvre si le véhicule recule ou si la marche arrière est enclenchée sur le véhicule. Par l'expression « la marche arrière est enclenchée sur le véhicule » ou « le véhicule est en marche arrière », on entend une configuration ou un état du véhicule le rendant apte à reculer, par exemple lorsque le levier de vitesses est en position de marche arrière. Le véhicule peut en effet être immobile, alors que la marche arrière est enclenchée, le véhicule étant prêt à reculer. Ce véhicule est donc dans une situation où les vitesses de trafic sont autant limitées que dans une situation où il reculerait.

Egalement, le fait que le véhicule soit en marche arrière, peut être utilisé dans une sous-étape du procédé permettant de détecter si le véhicule recule ou est prêt à reculer.

De même, le deuxième mode est mis en œuvre si le véhicule avance ou si le véhicule est en marche avant. Par l'expression « la marche arrière n'est pas enclenchée » ou « le véhicule est en marche avant », on entend une configuration ou un état du véhicule le rendant apte à avancer, par exemple lorsque le levier de vitesses est au point mort ou en position de marche avant. Le fait que le véhicule soit en marche avant, peut être utilisé dans une sous-étape du procédé permettant de détecter si le véhicule avance ou est susceptible d'avancer.

Dans le cadre de cette invention, la fonction de feu de recul sera classée dans les fonctions de signalisation.

Le procédé selon l'invention peut optionnellement présenter une ou plusieurs des caractéristiques suivantes :
- la première fonction de signalisation est un feu de position arrière ou un feu stop ; cela permet de renforcer la sécurité en rendant ces fonctions-là visible de loin lorsque le véhicule est susceptible d'avancer ;
- la première fonction de signalisation est un feu stop, l'étape d'activer le premier ensemble étant mise en œuvre si le véhicule freine ; le procédé de l'invention est d'autant plus intéressant en matière de sécurité dans le cadre de cette fonction de feu stop ;
- la deuxième fonction de signalisation est un feu de recul ; le feu de recul n'étant utilisé que lors du ou pour le recul de véhicule, ce feu de recul est particulièrement adapté pour être la deuxième fonction de signalisation du procédé selon l'invention ;
- ledit faisceau lumineux complémentaire est agencé pour renforcer l'intensité lumineuse de la première fonction de signalisation ; c'est une manière simple de permettre à la première fonction de signalisation, en particulier un feu stop, d'être vue de loin. Selon l'invention, ledit faisceau lumineux complémentaire présente une répartition photométrique dont le motif est identique à celui de la répartition photométrique de la première fonction ; le faisceau lumineux complémentaire présente ainsi des ratios d'intensité en différents points de sa répartition photométrique identiques à ceux de la première fonction de signalisation, ce qui permet de renforcer la répartition de l'intensité lumineuse du faisceau lumineux généré par le premier ensemble de modules optiques, tout en conservant les ratios d'intensité lumineuse en différents points de sa répartition photométrique.

Un autre objet de l'invention est un feu arrière de véhicule comprenant :
- un premier ensemble d'un ou plusieurs modules optiques, le ou les modules optiques étant aptes à générer un ou plusieurs faisceaux lumineux, de manière à ce que le premier ensemble génère une première fonction de signalisation,
- un deuxième ensemble d'un ou plusieurs modules optiques le ou les modules optiques étant aptes à générer un ou plusieurs faisceaux lumineux, de manière à ce que le deuxième ensemble génère une deuxième fonction de signalisation distincte de la première fonction de signalisation,
le ou au moins l'un des modules optiques du deuxième ensemble, dit module optique bi-fonction, est agencé de manière à pouvoir émettre alternativement deux faisceaux lumineux distincts, le premier faisceau lumineux réalisant ou participant à la réalisation de la deuxième fonction de signalisation, et le deuxième faisceau complémentaire venant compléter la première fonction de signalisation, ledit faisceau lumineux complémentaire présentant une répartition photométrique dont le motif est identique à celui de la répartition photométrique de la première fonction.

Ce feu arrière est adapté pour la mise en œuvre du procédé selon l'invention. Il permet donc d'obtenir les avantages de ce procédé.

Le feu arrière selon l'invention peut optionnellement présenter une ou plusieurs des caractéristiques suivantes :
- au moins l'un des modules optiques comprend un guide de lumière comprenant au moins un dioptre d'entrée et au moins une surface éclairante, le guide de lumière étant agencé de manière à pouvoir recevoir les rayons lumineux émis par une source de lumière au travers de ce dioptre d'entrée, et guider ces rayons jusqu'à cette surface éclairante, d'où ces rayons sortent pour générer seul ou participer à la génération de la première fonction de signalisation ou de la deuxième fonction de signalisation ; cela permet de réaliser des agencements différents d'autres systèmes d'orientation des rayons lumineux, tels que par exemple des réflecteurs ; les guides de lumière peuvent être couplés à des diodes électroluminescentes, couramment appelées DEL, ou de manière plus répandue LED ; les LED sont particulièrement adaptées à un pilotage par un procédé ;
- le module optique bi-fonction comprend un guide de lumière comprenant deux dioptres d'entrée distants l'un de l'autre et une surface éclairante, notamment unique, ce guide de lumière, dit guide de lumière double entrées, étant agencé de manière à ce que :
   o l'un des dioptres d'entrée, appelé premier dioptre d'entrée, puisse recevoir la lumière d'une source de lumière au travers de ce dioptre d'entrée,
   o l'autre des dioptres d'entrée, appelé deuxième dioptre d'entrée, puisse recevoir la lumière d'une autre source de lumière au travers de ce deuxième dioptre d'entrée,
   o il guide la lumière provenant de ses dioptres d'entrée jusqu'à la surface éclairante, d'où cette lumière sortira pour générer ou participer à la génération de la deuxième fonction de signalisation ou pour compléter la première fonction de signalisation ;
   c'est un mode de réalisation simple d'un module optique bi-fonction avec un guide de lumière ; le pilotage du module optique bi-fonction est également simplifié car il suffit d'agir ou non sur l'alimentation de la source lumineuse correspondant au mode de fonctionnement à mettre en œuvre dans le procédé selon l'invention ;
- le module optique bi-fonction comprend les deux sources de lumières d'intensités et/ou de couleurs différentes, l'une des sources de lumière étant agencée pour émettre au travers du premier dioptre d'entrée du guide de lumière double entrées, l'autre des sources de lumière étant agencée pour émettre au travers du deuxième dioptre d'entrée du guide de lumière double entrées ; il s'agit d'un mode de réalisation simple de faisceaux lumineux différents pour la première fonction de signalisation et pour la deuxième fonction de signalisation, notamment lorsque celles-ci requièrent des intensités et/ou des couleurs différentes ;
- les sources de lumière dont le guide de lumière double entrées reçoit la lumière sont les éléments photoémissifs de diodes électroluminescentes distinctes ; les LED sont particulièrement adaptées pour une alimentation alternative et donc pour le pilotage par le procédé selon l'invention ;
- le module optique bi-fonction comprend :
   o un guide de lumière comprenant un dioptre d'entrée, notamment commun ou unique à l'égard des deux sources de lumière, et une surface éclairante, notamment unique,
   o deux sources de lumière agencées pour émettre au travers dudit dioptre d'entrée, les sources de lumière ayant des intensités et/ou des couleurs différentes, le guide de lumière étant agencé pour guider la lumière provenant de son dioptre d'entrée jusqu'à cette surface éclairante, d'où cette lumière sortira pour générer ou participer à la génération de la deuxième fonction de signalisation ou pour compléter
   la première fonction de signalisation ; cela permet une réalisation plus simple du guide de lumière, en ayant un dioptre d'entrée commun pour les deux sources de lumière ; selon un exemple de réalisation les sources de lumière du module bi-fonction sont des éléments photoémissifs d'une même diode électroluminescente ou de diodes électroluminescentes distinctes ; cela permet une réalisation plus simple du dioptre d'entrée commun ; ce type de LED est appelé LED bi-puces ou LED multi puces, les puces correspondant aux éléments photoémissifs ; dans ce cas ces puces peuvent être pilotées de manière autonome ;
- l'une des sources de lumière du module optique bi-fonction est apte à émettre une lumière rouge et l'autre des sources de lumière du module optique bi-fonction est apte à émettre une lumière blanche ; cela permet de compléter une première fonction avec une lumière rouge, telle qu'une fonction stop ou une fonction feu de position arrière, et une deuxième fonction avec une lumière blanche, telle qu'un feu de recul ;
- le ou les modules optiques dudit premier ensemble comprennent des sources de lumière aptes à émettre de la lumière rouge, de manière à ce que la lumière émise par ledit premier ensemble soit rouge ; cela permet de réaliser une première fonction avec une lumière rouge, telle qu'une fonction stop ou une fonction feu de position arrière ;
- il comprend un module de commande des sources de lumière du module optique bi-fonction, ledit module de commande étant apte à activer l'une des sources de lumière lorsque la marche arrière n'est pas enclenchée sur le véhicule et apte à activer l'autre des sources de lumière lorsque le véhicule recule et/ou est en marche arrière ; le dispositif comprend ainsi lui-même les éléments de pilotage du feu arrière pour mettre en œuvre le procédé selon l'invention ; le module de commande peut être intégré par exemple sur la carte électronique de commande des sources de lumière, notamment des LED ; l'information sur l'état du véhicule peut provenir du véhicule lui-même notamment de capteurs, le feu arrière comprenant des moyens de réception de signaux contenant cette information.

Ainsi selon une réalisation, le procédé de l'invention est mis en œuvre pour commander les modules optiques d'un feu arrière selon l'invention.

Dans le procédé selon l'invention, ou dans le feu arrière selon l'invention, la première fonction peut être un feu stop ou un feu de position arrière, plus particulièrement un feu stop, et la deuxième fonction peut être un feu de recul.

D'autres caractéristiques et avantages de l'invention apparaîtront à la lecture de la description détaillée des exemples non limitatifs qui suivent, pour la compréhension de laquelle on se reportera aux dessins annexés, parmi lesquels :
- La figure 1 représente une vue de face d'un feu arrière de véhicule selon l'invention dans un premier mode de fonctionnement.
- La figure 2 représente une vue de face du feu arrière de véhicule de la figure 1 dans un deuxième mode de fonctionnement.
- La figure 3 représente des modules optiques du feu arrière selon l'invention, selon un premier mode de réalisation du module optique bi-fonction.
- La figure 4 représente un module optique bi-fonction du feu arrière selon l'invention, selon un deuxième mode de réalisation.

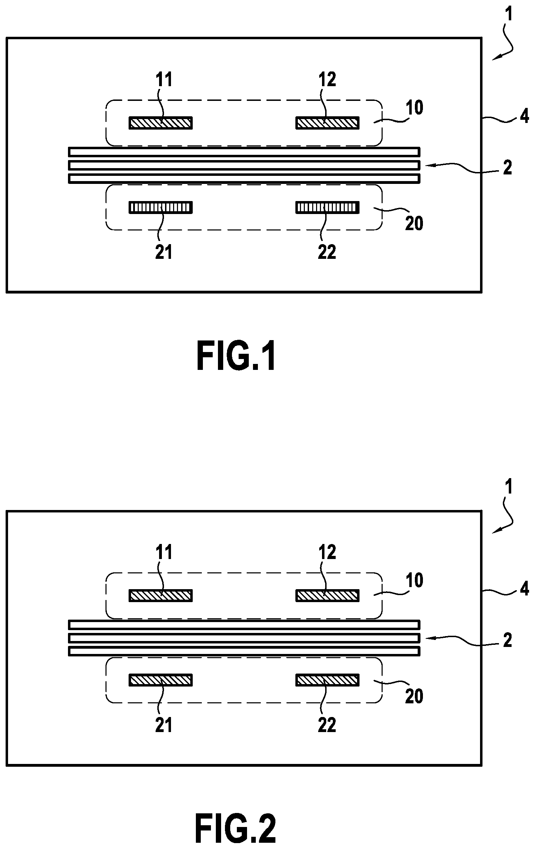

Les figures 1 et 2 illustrent schématiquement un feu arrière 1 selon l'invention dans deux modes de fonctionnement activés selon le procédé selon l'invention.

Ce feu arrière 1 comprend un boitier 4 fermé par une glace transparente (non représentée) en avant de modules optiques 11, 12, 21, 22 de ce feu arrière. Les figures 1 et 2 sont vues de face, ainsi seules les surfaces éclairantes de ces modules optiques 11, 12, 21, 22 sont représentées.

Les modules optiques 11, 12, du haut dans cet exemple, forment un premier ensemble 10. Les modules optiques 21, 22, du bas dans cet exemple, forment un deuxième ensemble 10.

Ce premier ensemble 10 et ce deuxième ensemble 20 de modules optiques 11, 12, 21, 22 peuvent être séparés par exemple par un masque ou par d'autres modules optiques assurant une autre fonction, telle que la fonction lampe de ville, représenté ici par les trois barres horizontales référencées 2.

Les modules optiques 11, 12, du premier ensemble 10, sont aptes à générer chacun un faisceau lumineux. Les deux faisceaux lumineux obtenus réalisent une première fonction de signalisation, telle qu'une fonction de feu arrière de position ou une fonction de feu stop.

Dans l'exemple décrit ci-après la première fonction est un feu stop, qui sera activé lorsque que le véhicule freinera, que ce véhicule avance ou recule et qu'il soit en marche avant ou en marche arrière. Cette fonction de feu stop est représentée par les hachures en diagonales dans les figures 1 et 2.

Les modules optiques 21, 22, du deuxième ensemble 20, ci-après modules optiques bi-fonction 21, 22, sont aptes à générer chacun deux faisceaux lumineux distincts, mis en œuvre en fonction de mode de fonctionnement de ces modules optiques bi-fonction 21, 22, et donc du mode de fonctionnement du feu arrière 1.

En figure 1, la marche arrière du véhicule est enclenchée. Selon l'exemple de procédé illustré, les modules optiques bi-fonction 21, 22, sont commandés pour fonctionner selon un premier mode de fonctionnement, au cours duquel les modules optiques bi-fonction 21, 22, génèrent chacun un faisceau lumineux, les deux faisceaux formés réalisant une deuxième fonction de signalisation, dans cet exemple un feu de recul. Cette fonction de feu de recul est représentée par les hachures verticales sur la figure 1.

Si au cours de la manœuvre le véhicule freine, le premier ensemble de modules optiques 11, 12, pourra émettre une fonction de feu stop suffisamment forte pour qu'elle soit visible à une distance suffisante. Dans un parking, ou dans une petite rue, il n'est pas nécessaire que ce feu stop soit vu d'aussi loin que sur une voie rapide.

Lorsque la marche avant est enclenchée, par exemple, lorsque le véhicule circule sur une voie rapide, il convient que ce feu stop soit vu de plus loin.

Au lieu d'ajouter des modules supplémentaires uniquement dédiés à apporter un surplus de puissance, le feu arrière 1 est réalisé de manière à ce que les modules optiques 21, 22 du deuxième ensemble 20 puissent générer des faisceaux lumineux différents de ceux qu'ils génèrent lors du premier mode de fonctionnement.

Ainsi, lorsque la marche avant est enclenchée, selon le procédé illustré, les modules optiques bi-fonction 21, 22, sont commandés selon un deuxième mode de fonctionnement, dans lequel ils vont être aptes à générer des faisceaux lumineux complémentaires qui vont compléter le feu stop généré par le premier ensemble 10, en cas de freinage du véhicule.

A noter que dans cet exemple, la totalité des modules optiques du deuxième ensemble 20 est agencée comme des modules optiques bi-fonction 21, 22. Cependant, il serait possible de n'en réaliser qu'un seul de cette manière. En réalisant les deux modules optiques comme des modules bi-fonction, on rend la fonction de feu stop visible d'encore plus loin.

Dans cet exemple, le faisceau lumineux complémentaire de chacun des modules optiques bi-fonction 21, 22 présente une répartition photométrique dont le motif est identique à celui de la répartition photométrique de la première fonction. On obtient donc un renforcement de l'intensité en conservant le motif et la répartition sur la grille photométrique de la fonction feu stop avant qu'elle soit complétée par les modules optiques bi-fonction 21, 22.

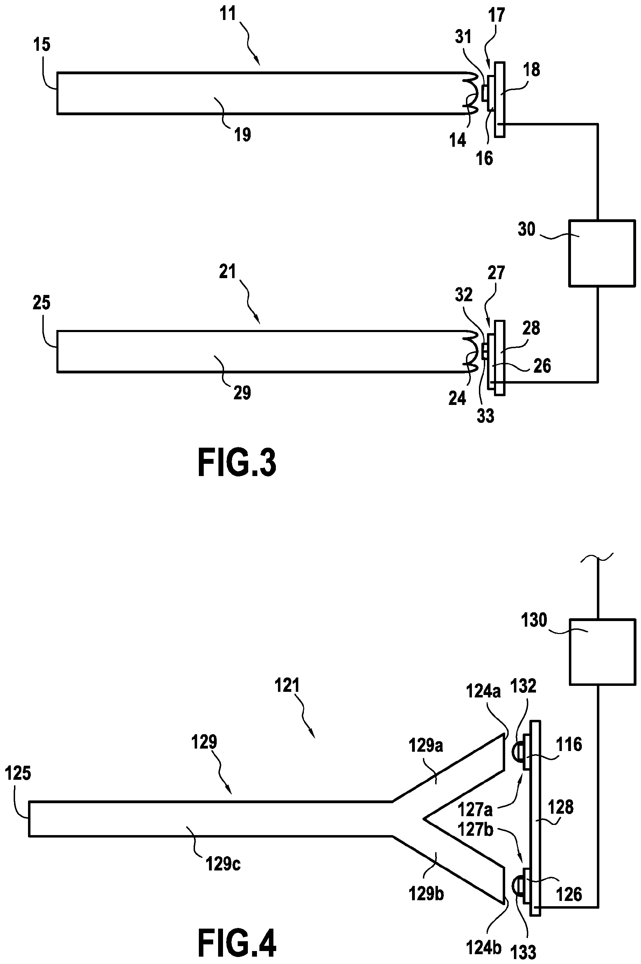

La figure 3 illustre un exemple de réalisation des modules optiques 11, 12, 21, 22, du feu arrière des figures 1 et 2. Seul un module optique 11, 21 par ensemble est représenté. La description qui suit est transposable aux autres modules optiques référencés ci-dessus 12, 22. Chacun des modules optiques 11, 12, comprend un guide de lumière 19, 29. Chacun de ces guides de lumière 19, 29, comprend un dioptre d'entrée 14, 24, en vis-à-vis duquel est agencé une diode électroluminescente 17, 27, (ci-après LED) de manière à ce qu'elle émette ses rayons lumineux vers le dioptre d'entrée 14, 24 correspondant. Ces rayons vont ensuite traverser le dioptre d'entrée correspondant 14, 24, puis être guidés, notamment par réflexion interne, par exemple totale, à l'intérieur du guide de lumière 19, 29 correspondant sur les faces de ce guide de lumière, jusqu'à un dioptre de sortie terminal formant la surface éclairante 15, 25, de ce guide de lumière 19, 29. Ces surfaces éclairantes 15 et 25 sont l'image visible des modules optiques 11, respectivement 21, illustrés sur les figures 1 et 2.

On notera que dans cet exemple ces guides de lumière 19, 29, sont en formes de plaques parallélépipédiques, leurs surfaces éclairantes visibles de face en figures 1 et 2 étant rectangulaires. Néanmoins d'autres formes sont possibles.

Chaque LED 17 associée à un guide de lumière 19 d'un des modules optiques du premier ensemble 10, comprend un substrat 16 et un élément photoémetteur 31 monté sur ce substrat en vis-à-vis du dioptre d'entrée 14. Cet élément photoémetteur 31 est conçu et agencé pour émettre de la lumière rouge lorsqu'il est soumis à un courant électrique. Le substrat 16 est lui-même monté sur une carte électronique de commande 18 de la LED 17. Lorsque la carte électronique alimente l'élément photoémetteur 31 en courant, celui-ci émet des rayons lumineux de couleur rouge. L'agencement du guide 19 va guider et dévier ces rayons de manière à ce qu'en sortant, les rayons émis depuis les surfaces éclairantes 15 des guides de lumières du premier ensemble 10 forment un feu stop.

Chaque LED 27 associée à un guide de lumière 29 d'un des modules optiques 21, 22 du premier ensemble 20, comprend un substrat 26 et deux éléments photoémetteurs 32, 33, montés sur ce substrat 26 et en vis-à-vis du dioptre d'entrée 24 de ce guide de lumière 29. Un premier 32 de ces éléments photoémetteurs est conçu et agencé pour émettre de la lumière blanche lorsqu'il est soumis à un courant électrique. Un deuxième 33 de ces éléments photoémetteurs est conçu et agencé pour émettre de la lumière rouge lorsqu'il est soumis à un courant électrique. Ces deux éléments photoémetteurs 32 et 32 sont montés sur un même substrat 26, si bien que la LED peut être qualifiée de bi-puce. Alternativement, il peut s'agir de deux LED montée chacune sur son substrat et placée côte à côte. Dans ces deux cas, la source lumineuse sera ci-après appelée LED bi-fonction. Le substrat 26 est lui-même monté sur une carte électronique de commande 28 de la LED bi-fonction 27.

La carte électronique de commande 28 de cette LED bi-fonction est connectée à un module de commande 30, qui en fonction des signaux d'information reçus par le véhicule détermine l'allumage des modules optiques en fonction de la marche avant ou de la marche arrière du véhicule.

Si le véhicule est en marche arrière, le module de commande 30 transmet la consigne d'activation du premier élément photoémetteur 32 de la LED bi-fonction 27. La carte électronique de commande 28 de cette LED bi-fonction 27 alimente alors le premier élément photoémetteur 32 en courant, celui-ci émet alors des rayons lumineux de couleur blanche. L'agencement du guide de lumière 29 va guider et dévier ces rayons de manière à ce qu'en sortant, les rayons émis depuis les surfaces éclairantes 25 des guides de lumières du deuxième ensemble 20 forment un feu de recul réglementaire.

Le module de commande 30 est également connecté à la carte électronique de commande 18 de chaque LED 17 du premier ensemble 10. En cas de freinage, ce module de commande 30 enverra la consigne de freinage à cette carte électronique de commande 18 du premier ensemble 10. Cette dernière alimentera alors l'élément photoémetteur 18, et le premier ensemble 10 génèrera une fonction stop réglementaire. Le deuxième ensemble 20 continuera néanmoins de générer une fonction de feu de recul.

Si le véhicule est en marche avant, le module de commande 30 se place en deuxième mode de fonctionnement. Si au cours de ce deuxième mode de fonctionnement, le véhicule freine, en plus de la consigne de freinage à la carte électronique de commande 18 du premier ensemble 10, le module de commande 30 transmet la consigne d'activation du deuxième élément photoémetteur 33 de la LED bi-fonction 27. La carte électronique de commande 28 de cette LED bi-fonction 27 alimente alors le deuxième élément photoémetteur 33 en courant, celui-ci émet alors des rayons lumineux de couleur rouge. L'agencement du guide de lumière 29 va guider et dévier ces rayons rouges, de manière à ce qu'en sortant les rayons émis depuis les surfaces éclairantes 25 des guides de lumières du deuxième ensemble 20 s'ajoutent aux rayons lumineux émis par les surfaces éclairantes 15 du premier ensemble 10, et forment avec ceux-ci un feu stop dit renforcé. Ce feu stop sera ainsi plus puissant que lorsque le feu arrière est en premier mode de fonctionnement et donc visible de plus loin, ce qui prend son intérêt pour les déplacements à haute vitesse, notamment sur autoroute.

Ce feu arrière et le procédé selon l'invention ont donc permis de mettre à profit, lors de la marche avant, des modules optiques servant à signaler le recul du véhicule lorsque la marche arrière est enclenchée. Ce feu arrière et ce procédé permettent donc d'augmenter la puissance du signal de feu stop sans encombrer davantage le feu arrière par des modules supplémentaires.

Le module de commande 30 peut déterminer si le véhicule est en marche arrière ou en marche avant par des capteurs au niveau du levier de vitesse ou par des instructions qu'il reçoit lorsque la marche arrière ou la marche avant est enclenchée.

Les modules optiques du deuxième ensemble 20 peuvent également être réalisés selon un mode de réalisation illustré en figure 4. Les modules optiques 11, 12 du premier ensemble 10 restent identiques à ceux illustrés en figure 3 et ne sont donc pas représentés en figure 4.

Comme illustré en figure 4, le guide de lumière 129 de chaque deuxième module optique 121 comprend un premier dioptre d'entrée 124a et un deuxième dioptre d'entrée 124b, portés respectivement par une première branche 129a et une deuxième branche 129b du guide de lumière 129. Ces deux branches 129a, 129b se rejoignent en un tronc commun 129c, qui porte le dioptre de sortie formant la surface éclairante 125 du guide de lumière 129.

Ces premier et deuxième dioptres d'entrée 124a et 124b sont donc distants et distincts l'un de l'autre. En face de chacun d'eux est agencée une LED, soit une première LED 127a en face du premier dioptre d'entrée 124a et une deuxième LED 127b en face du deuxième dioptre d'entrée 124b.

Chacune de ces LED 127a, 127b, comprend un élément photoémetteur monté sur un substrat correspondant 116, 126.

L'élément photoémetteur 132 de cette première LED 127a est conçu et agencé pour émettre de la lumière blanche lorsqu'il est soumis à un courant électrique. L'élément photoémetteur 133 de cette deuxième LED 127b est conçu et agencé pour émettre de la lumière rouge lorsqu'il est soumis à un courant électrique.

Les substrats 116, 126 de ces deux LED 127a, 127b sont montés sur une même carte électronique de commande 128. Cette dernière est connectée à un module de commande 130, lui-même connecté à la ou aux cartes électroniques de commande 18 des modules optiques 11, 12 du premier ensemble 10.

En cas de freinage, ce module de commande 130 enverra la consigne de freinage à cette carte électronique de commande 18 du premier ensemble 10, comme décrit précédemment pour la figure 3.

Dans le mode de réalisation de la figure 4, si le véhicule est en marche arrière, le module de commande 130 transmet la consigne d'activation de la première LED 127a. La carte électronique de commande 128 alimente alors la première LED 127a en courant. L'élément photoémetteur 132 de cette première LED émet alors des rayons lumineux de couleur blanche, au travers du premier dioptre d'entrée 124a. L'agencement du guide de lumière 129 va guider et dévier ces rayons le long de sa première branche 129a, puis le long de son tronc 129c, jusqu'au dioptre de sortie dont ils vont sortir. L'agencement du guide de lumière 129 est tel, que les rayons blancs sortant des surfaces éclairantes 25 des guides de lumière du deuxième ensemble 20 forment un feu de recul.

Comme dans le mode de réalisation de la figure 3, le module de commande 130 pourra commander le premier ensemble 10 pour générer le feu stop, tout en permettant au deuxième ensemble 20 de générer en parallèle une fonction de feu de recul.

Dans le mode de réalisation de la figure 4, si le véhicule est en marche avant, le module de commande 130 se place en deuxième mode de fonctionnement. Si au cours de ce deuxième mode de fonctionnement, le véhicule freine, en plus de la consigne de freinage à la carte électronique de commande 18 pour alimenter les LED des modules optiques du premier ensemble 10, le module de commande 130 transmet la consigne d'activation de l'élément photoémetteur 133 de la deuxième LED 127b des modules optiques 121 du deuxième ensemble. La carte électronique de commande 128 de cette deuxième LED 127b alimente alors son élément photoémetteur 133 en courant, celui-ci émet alors des rayons lumineux de couleur rouge. L'agencement du guide de lumière 129 va guider et dévier ces rayons rouges le long de sa deuxième branche 129b, puis le long de son tronc 129c, jusqu'au dioptre de sortie dont ils vont sortir. L'agencement du guide de lumière 129 est tel, que les surfaces éclairantes 25 des guides de lumière du deuxième ensemble 20 forment alors un feu stop avec les rayons lumineux émis par les surfaces éclairantes 15 du premier ensemble 10.

## Revendications

1. Procédé de commande de modules optiques (11, 12, 21, 22 ; 121) d'un feu arrière (1) d'un véhicule, ledit procédé comprenant les étapes ci-après:
- activer un premier ensemble (10) d'un ou plusieurs modules optiques (11, 12), ledit premier ensemble générant une première fonction de signalisation,
- si la marche arrière est enclenchée sur le véhicule, activer selon un premier mode de fonctionnement un deuxième ensemble (20) d'un ou plusieurs modules optiques (21, 22 ; 121), de manière à ce que ledit deuxième ensemble génère une deuxième fonction de signalisation distincte de la première fonction de signalisation,
- si la marche arrière n'est pas enclenchée sur le véhicule, activer selon un deuxième mode de fonctionnement le ou au moins l'un des modules optiques dudit deuxième ensemble, de manière à ce que ce module optique génère un faisceau lumineux complémentaire distinct du faisceau lumineux qu'il émet dans le premier mode de fonctionnement, ce faisceau lumineux complémentaire distinct venant compléter la première fonction de signalisation, ledit faisceau lumineux complémentaire présentant une répartition photométrique dont le motif est identique à celui de la répartition photométrique de la première fonction.

2. Procédé selon la revendication 1, dans lequel la première fonction de signalisation est un feu de position arrière ou un feu stop.

3. Procédé selon l'une quelconque des revendications 1 à 2, dans lequel la deuxième fonction de signalisation est un feu de recul.

4. Procédé selon l'une quelconque des revendications 1 à 3, dans lequel ledit faisceau lumineux complémentaire est agencé pour renforcer l'intensité lumineuse de la première fonction de signalisation.

5. Feu arrière de véhicule (1) comprenant :
- un premier ensemble (10) d'un ou plusieurs modules optiques (11, 12), le ou les modules optiques étant aptes à générer un ou plusieurs faisceaux lumineux, de manière à ce que ledit premier ensemble (10) génère une première fonction de signalisation,
- un deuxième ensemble (20) d'un ou plusieurs modules optiques (21, 22 ; 121), le ou les modules optiques étant aptes à générer un ou plusieurs faisceaux lumineux, de manière à ce que ledit deuxième ensemble (20) génère une deuxième fonction de signalisation distincte de la première fonction de signalisation,
**caractérisé en ce que** le ou au moins l'un des modules optiques dudit deuxième ensemble, dit module optique bi-fonction (21, 22 ; 121), est agencé de manière à pouvoir émettre alternativement deux faisceaux lumineux distincts, le premier faisceau lumineux réalisant ou participant à la réalisation de la deuxième fonction de signalisation, et le deuxième faisceau complémentaire venant compléter la première fonction de signalisation, ledit faisceau lumineux complémentaire présentant une répartition photométrique dont le motif est identique à celui de la répartition photométrique de la première fonction.

6. Feu arrière selon la revendication 5, dans lequel au moins l'un des modules optiques (11, 12, 21, 22) comprend un guide de lumière (19, 29 ; 129) comprenant au moins un dioptre d'entrée (14, 24 ; 124a, 124b) et au moins une surface éclairante (15, 25), le guide de lumière étant agencé de manière à pouvoir recevoir les rayons lumineux émis par une source de lumière (31, 32 ; 132, 133) au travers de ce dioptre d'entrée, et guider ces rayons lumineux jusqu'à cette surface éclairante (15, 25), d'où ces rayons sortent pour générer ou participer à la génération de ladite première fonction de signalisation ou de ladite deuxième fonction de signalisation.

7. Feu arrière selon la revendication 5 ou 6, dans lequel le module optique bi-fonction (121) comprend un guide de lumière (129) comprenant deux dioptres d'entrée (124a, 124b) distants l'un de l'autre et une surface éclairante (125), ce guide de lumière, dit guide de lumière double entrées (129), étant agencé de manière à ce que :
- l'un des dioptres d'entrée, dit premier dioptre (124a), puisse recevoir la lumière d'une source de lumière (132) au travers de ce dioptre d'entrée,
- l'autre des dioptres d'entrée, dit deuxième dioptre (124b), puisse recevoir la lumière d'une autre source de lumière (133) au travers de ce deuxième dioptre d'entrée,
- il guide la lumière provenant de ses dioptres d'entrée jusqu'à la surface éclairante, d'où cette lumière sort pour générer ou participer à la génération de la deuxième fonction de signalisation ou pour compléter la première fonction de signalisation.

8. Feu arrière selon la revendication 7, dans lequel le module optique bi-fonction (121) comprend les deux sources de lumières d'intensités et/ou de couleurs différentes, l'une (132) des sources de lumière étant agencée pour émettre au travers du premier dioptre d'entrée (124a) du guide de lumière double entrées (129), l'autre (133) des sources de lumière étant agencée pour émettre au travers du deuxième dioptre d'entrée (124b) du guide de lumière double entrées (129).

9. Feu arrière selon la revendication 8, dans lequel les sources de lumière dont le guide de lumière double entrées (129) reçoit la lumière sont les éléments photoémissifs (132, 133) de diodes électroluminescentes (127a, 127b) distinctes.

10. Feu arrière selon la revendication 6, dans lequel le module optique bi-fonction (21) comprend :
- un guide de lumière (29) comprenant un dioptre d'entrée (24) et une surface éclairante (25),
- deux sources de lumière (32, 33) agencées pour émettre au travers dudit dioptre d'entrée, les sources de lumière ayant des intensités et/ou des couleurs différentes,
ledit guide de lumière (29) étant agencé pour guider la lumière provenant de son dioptre d'entrée (24) jusqu'à cette surface éclairante (25), d'où cette lumière sort pour générer ou participer à la génération de la deuxième fonction de signalisation ou pour compléter la première fonction de signalisation.

11. Feu arrière selon l'une des revendications 8 à 10, dans lequel l'une (33, 133) des sources de lumière du module optique bi-fonction (21, 121) est apte à émettre une lumière rouge et l'autre (32, 132) des sources de lumière du module optique bi-fonction (21, 121) est apte à émettre une lumière blanche.

12. Feu arrière selon la revendication 11, dans lequel le ou les modules optiques (11, 12) dudit premier ensemble (10) comprennent au moins une source de lumière (31) apte à émettre de la lumière rouge, de manière à ce que la lumière émise par ledit premier ensemble (10) soit rouge.

13. Feu arrière selon l'une des revendications 6 à 12, comprenant un module de commande (30 ; 130) des sources de lumières (32, 33 ; 132, 133) du module optique bi-fonction (21, 22 ; 121), ledit module de commande étant apte à activer l'une (33 ; 133) des sources de lumière lorsque le véhicule n'est pas en marche arrière et apte à activer l'autre (32 ; 132) des sources de lumière lorsque le véhicule recule et/ou est en marche arrière.

14. Procédé selon l'une des revendications 1 à 4, **caractérisé en ce qu'**il est mis en œuvre pour commander les modules optiques (11, 12, 21, 22 ; 121) d'un feu arrière (1) selon l'une des revendications 6 à 13.

## Patentansprüche

1. Verfahren zur Steuerung von Optikmodulen (11, 12, 21, 22; 121) einer Rückleuchte (1) eines Fahrzeugs, das Verfahren umfassend die folgenden Schritte:
- Aktivieren einer ersten Anordnung (10) eines oder mehrerer Optikmodule (11, 12), wobei die erste Anordnung eine erste Signalisierungsfunktion erzeugt,
- wenn der Rückwärtsgang im Fahrzeug eingelegt ist, Aktivieren einer zweiten Anordnung (20) einer oder mehrerer Optikmodule (21, 22; 121) gemäß einem ersten Betriebsmodus, damit die zweite Anordnung eine zweite Signalisierungsfunktion erzeugt, die von der ersten Signalisierungsfunktion gesondert ist,
- wenn der Rückwärtsgang im Fahrzeug nicht eingelegt ist, Aktivieren des oder wenigstens eines der Optikmodule der zweiten Anordnung gemäß einem zweiten Betriebsmodus, damit dieses Optikmodul ein ergänzendes Lichtbündel erzeugt, das von dem Lichtbündel gesondert ist, das es im ersten Betriebsmodus emittiert, wobei dieses gesonderte ergänzende Lichtbündel die erste Signalisierungsfunktion ergänzt, wobei das ergänzende Lichtbündel eine photometrische Verteilung aufweist, deren Muster mit jenem der photometrischen Verteilung der ersten Funktion identisch ist.

2. Verfahren nach Anspruch 1, wobei die erste Signalisierungsfunktion eine hintere Positionsleuchte oder eine Bremsleuchte ist.

3. Verfahren nach einem der Ansprüche 1 bis 2, wobei die zweite Signalisierungsfunktion eine Rückfahrleuchte ist.

4. Verfahren nach einem der Ansprüche 1 bis 3, wobei das ergänzende Lichtbündel angeordnet ist, die Leuchtstärke der ersten Signalisierungsfunktion zu verstärken.

5. Fahrzeugrückleuchte (1) umfassend:
- eine erste Anordnung (10) von einem oder mehreren Optikmodulen (11, 12), wobei das oder die Optikmodule geeignet sind, ein oder mehrere Lichtbündel zu erzeugen, damit die erste Anordnung (10) eine erste Signalisierungsfunktion erzeugt,
- eine zweite Anordnung (20) von einem oder mehreren Optikmodulen (21, 22; 121), wobei das oder die Optikmodule geeignet sind, ein oder mehrere Lichtbündel zu erzeugen, damit die zweite Anordnung (20) eine zweite Signalisierungsfunktion erzeugt, die von der ersten Signalisierungsfunktion gesondert ist,
**dadurch gekennzeichnet, dass** das oder wenigstens eins der Optikmodule der zweiten Anordnung, das Bifunktions-Optikmodul (21, 22; 121), so angeordnet ist, dass es alternativ zwei gesonderte Lichtbündel emittieren kann, wobei das erste Lichtbündel die zweite Signalisierungsfunktion ausführt oder an deren Ausführung mitwirkt, und das zweite ergänzende Lichtbündel die erste Signalisierungsfunktion ergänzt, wobei das ergänzende Lichtbündel eine photometrische Verteilung aufweist, deren Muster mit jenem der photometrischen Verteilung der ersten Funktion identisch ist.

6. Rückleuchte nach Anspruch 5, wobei wenigstens eins der Optikmodule (11, 12, 21, 22) einen Lichtleiter (19, 29; 129) umfasst, der wenigstens einen Eingangsdiopter (14, 24; 124a, 124b) und wenigstens eine beleuchtende Fläche (15, 25) umfasst, wobei der Lichtleiter so angeordnet ist, dass er die Lichtstrahlen, die von einer Lichtquelle (31, 32; 132, 133) emittiert werden, durch diesen Eingangsdiopter empfangen und diese Lichtstrahlen bis zu dieser beleuchtenden Fläche (15, 25) leiten kann, von wo diese Strahlen austreten, um die erste Signalisierungsfunktion oder die zweite Signalisierungsfunktion zu erzeugen oder an deren Erzeugung mitzuwirken.

7. Rückleuchte nach Anspruch 5 oder 6, wobei das Bifunktions-Optikmodul (121) einen Lichtleiter (129) umfasst, der zwei Eingangsdiopter (124a, 124b), die voneinander beabstandet sind, und eine beleuchtende Fläche (125) umfasst, wobei dieser Lichtleiter, der Doppeleingangs-Lichtleiter (129), so angeordnet ist, dass:
- einer der Eingangsdiopter, der erste Diopter (124a), das Licht einer Lichtquelle (132) durch diesen Eingangsdiopter empfangen kann,
- der andere der Eingangsdiopter, der zweite Diopter (124b), das Licht einer anderen Lichtquelle (133) durch diesen zweiten Eingangsdiopter empfangen kann,
- er das Licht von seinen Eingangsdioptern bis zur beleuchtenden Fläche leitet, von wo dieses Licht austritt, um die zweite Signalisierungsfunktion zu erzeugen oder an deren Erzeugung mitzuwirken, oder um die erste Signalisierungsfunktion zu ergänzen.

8. Rückleuchte nach Anspruch 7, wobei das Bifunktions-Optikmodul (121) die zwei Lichtquellen unterschiedlicher Stärken und/oder Farben umfasst, wobei eine (132) der Lichtquellen angeordnet ist, durch den ersten Eingangsdiopter (124a) des Doppeleingangs-Lichtleiters (129) zu emittieren, wobei die andere (133) der Lichtquellen angeordnet ist, durch den zweiten Eingangsdiopter (124b) des Doppeleingangs-Lichtleiters (129) zu emittieren.

9. Rückleuchte nach Anspruch 8, wobei die Lichtquellen, deren Doppeleingangs-Lichtleiter (129) das Licht empfängt, lichtemittierende Elemente (132, 133) gesonderter Leuchtdioden (127a, 127b) sind.

10. Rückleuchte nach Anspruch 6, wobei das Bifunktions-Optikmodul (21) Folgendes umfasst:
- einen Lichtleiter (29), der einen Eingangsdiopter (24) und eine beleuchtende Fläche (25) umfasst,
- zwei Lichtquellen (32, 33), die angeordnet sind, durch den Eingangsdiopter zu emittieren, wobei die Lichtquellen unterschiedliche Stärken und/oder Farben aufweisen,
wobei der Lichtleiter (29) angeordnet ist, das Licht von seinem Eingangsdiopter (24) bis zu dieser beleuchtenden Fläche (25) leitet, von wo dieses Licht austritt, um die zweite Signalisierungsfunktion zu erzeugen oder an deren Erzeugung mitzuwirken, oder um die erste Signalisierungsfunktion zu ergänzen.

11. Rückleuchte nach einem der Ansprüche 8 bis 10, wobei eine (33, 133) der Lichtquellen des Bifunktions-Optikmoduls (21, 121) geeignet ist, ein rotes Licht zu emittieren, und die andere (32, 132) der Lichtquellen des Bifunktions-Optikmoduls (21, 121) geeignet ist, ein weißes Licht zu emittieren.

12. Rückleuchte nach Anspruch 11, wobei das oder die Optikmodule (11, 12) der ersten Anordnung (10) wenigstens eine Lichtquelle (31) umfassen, die geeignet ist, rotes Licht zu emittieren, so dass das Licht, das von der ersten Anordnung (10) emittiert wird, rot ist.

13. Rückleuchte nach einem der Ansprüche 6 bis 12, umfassend ein Steuerungsmodul (30; 130) der Lichtquellen (32, 33; 132, 133) des Bifunktions-Optikmoduls (21, 22; 121), wobei das Steuerungsmodul geeignet ist, eine (33; 133) der Lichtquellen zu aktivieren, wenn sich das Fahrzeug nicht im Rückwärtsgang befindet, und geeignet ist, die andere (32; 132) der Lichtquellen zu aktivieren, wenn das Fahrzeug rückwärts fährt und/oder sich im Rückwärtsgang befindet.

14. Verfahren nach einem der Ansprüche 1 bis 4, **dadurch gekennzeichnet, dass** es durchgeführt wird, um die Optikmodule (11, 12, 21, 22; 121) einer Rückleuchte (1) nach einem der Ansprüche 6 bis 13 zu steuern.

## Claims

1. Method for controlling optical modules (11, 12, 21, 22; 121) of a tail light (1) of a vehicle, said method comprising the following steps:
- activating a first set (10) of one or more optical modules (11, 12), said first set generating a first signaling function,
- if the vehicle has reverse gear engaged, activating, according to a first mode of operation, a second set (20) of one or more optical modules (21, 22; 121), so that said second set generates a second signaling function distinct from the first signaling function,
- if the vehicle does not have reverse gear engaged, activating, according to a second mode of operation, the or at least one of the optical modules of said second set, so that this optical module generates a complementary beam of light distinct from the beam of light it emits in the first mode of operation, this distinct complementary beam of light supplementing the first signaling function, said complementary beam of light having a photometric distribution, the pattern of which is identical to that of the photometric distribution of the first function.

2. Method according to Claim 1, in which the first signaling function is a tail position light or a stop light.

3. Method according to either one of Claims 1 and 2, in which the second signaling function is a reversing light.

4. Method according to any one of Claims 1 to 3, in which said complementary beam of light is designed to enhance the light intensity of the first signaling function.

5. Vehicle tail light (1) comprising:
- a first set (10) of one or more optical modules (11, 12), the optical module or modules being able to generate one or more beams of light in such a way that said first set (10) generates a first signaling function,
- a second set (20) of one or more optical modules (21, 22; 121), the optical module or modules being able to generate one or more beams of light in such a way that said second set (20) generates a second signaling function distinct from the first signaling function, **characterized in that** the or at least one of the optical modules of said second set, referred to as dual-function optical module (21, 22; 121), is arranged in such a way as to be able to emit two distinct beams of light alternatively, the first beam of light creating or participating in the creation of the second signaling function, and the second complementary beam supplementing the first signaling function, said complementary beam of light having a photometric distribution, the pattern of which is identical to that of the photometric distribution of the first function.

6. Tail light according to Claim 5, in which at least one of the optical modules (11, 12, 21, 22) comprises a light guide (19, 29; 129) comprising at least one input diopter (14, 24; 124a, 124b) and at least one illuminating surface (15, 25), the light guide being arranged in such a way as to be able to receive the rays of light emitted by a light source (31, 32; 132, 133) through this input diopter and guide these rays of light as far as this illuminating surface (15, 25), whence these rays exit to generate or participate in the generation of said first signaling function or said second signaling function.

7. Tail light according to Claim 5 or 6, in which the dual-function optical module (121) comprises a light guide (129) comprising two input diopters (124a, 124b) distant from one another and an illuminating surface (125), this light guide, referred to as a dual-input light guide (129), being arranged in such a way that:
- one of the input diopters, referred to as the first diopter (124a), can receive the light from a light source (132) through this input diopter,
- the other of the input diopters, referred to as the second diopter (124b), can receive the light from another light source (133) through this second input diopter,
- it guides the light coming from its input diopters as far as the illuminating surface, whence this light exits to generate or participate in the generation of the second signaling function or to supplement the first signaling function.

8. Tail light according to Claim 7, in which the dual-function optical module (121) comprises the two light sources of different intensities and/or different colors, one (132) of the light sources being arranged so as to emit through the first input diopter (124a) of the dual-input light guide (129), the other (133) of the light sources being arranged to emit through the second input diopter (124b) of the dual-input light guide (129).

9. Tail light according to Claim 8, in which the light sources from which the dual-input light guide (129) receives the light are the photoemissive elements (132, 133) of distinct light-emitting diodes (127a, 127b).

10. Tail light according to Claim 6, in which the dual-function optical module (21) comprises:
- a light guide (29) comprising an input diopter (24) and an illuminating surface (25),
- two light sources (32, 33) arranged to emit through said input diopter, the light sources having different intensities and/or different colors,
said light guide (29) being arranged to guide the light coming from its input diopter (24) as far as this illuminating surface (25), whence this light exits to generate or participate in the generation of the second signaling function or to supplement the first signaling function.

11. Tail light according to one of Claims 8 to 10, in which one (33, 133) of the light sources of the dual-function optical module (21, 121) is able to emit red light and the other (32, 132) of the light sources of the dual-function optical module (21, 121) is able to emit white light.

12. Tail light according to Claim 11, in which the optical module or modules (11, 12) of said first set (10) comprise at least one light source (31) able to emit red light, so that the light emitted by said first set (10) is red.

13. Tail light according to one of Claims 6 to 12, comprising a control module (30; 130) controlling the light sources (32, 33; 132, 133) of the dual-function optical module (21, 22; 121), said control module being able to activate one (33; 133) of the light sources when the vehicle is not in reverse gear and able to activate the other (32; 132) of the light sources when the vehicle is reversing and/or is in reverse gear.

14. Method according to one of Claims 1 to 4, **characterized in that** it is implemented to control the optical modules (11, 12, 21, 22; 121) of a tail light (1) according to one of Claims 6 to 13.
